# EUROPEAN PATENT SPECIFICATION

(11) **EP 1 160 541 B1**
(45) Date of publication and mention of the grant of the patent: **19.09.2007**
(21) Application number: 01113091.1
(22) Date of filing: 29.05.2001
(51) Int. Cl.: G01C 11/02, G08G 1/16, B60R 21/01, G06K 9/46

(54) **Integrated vision system**
Integriertes Sichtsystem
Systeme de vision intégré

(30) Priority: 30.05.2000 JP 2000160940
(43) Date of publication of application: 05.12.2001
(73) Proprietor: FUJI JUKOGYO KABUSHIKI KAISHA, Tokyo-To (JP)
(72) Inventor: Takatsuka, Takeshi, c/o Fuji Jukogyo K.K., Tokyo-to (JP); Suzuki, Tatsuya, c/o Fuji Jukogyo K.K., Tokyo-to (JP); Okada, Hiroshi, c/o Fuji Jukogyo K.K., Tokyo-to (JP)
(74) Representative: Popp, Eugen

(56) References cited:
- US-A- 5 410 346
- US-A- 5 530 420
- US-A- 5 699 057
- US-A- 5 983 161

## Description

### BACKGROUND OF THE INVENTION

The present invention relates to an integrated vision system that provides crew on vehicle with views of high visibility even at actually low visibility.

Vehicles, for example, aircraft are provided with a vision system having image sensors such as an infrared camera, a milli-wave radar and a laser radar. The vision system offers a driver or pilot with artificial pseudo-views generated based on view data collected by the image sensors at low visibility at night or in bad weather and three-dimensional (3-D) map data stored in the system for safety.

Japanese-Unexamined Patent Publication No. 11-72350 discloses generation of pseudo-views using wide-area geographical data based on 3-D map stored in memory and data on obstacles such as high-voltage electrical power lines, skyscrapers and cranes and displaying pseudo-views and actual views overlapping with each other on a transparent-type display mounted on a helmet of a pilot.

View data collected by the image sensors such as an infrared camera, a milli-wave radar and a laser radar are, however, not sufficient for a driver or pilot. Moreover, 3-D map data cannot follow actual changing geographical conditions. Pseudo-views generated based on these data therefore do not meet the requirements of a driver or pilot.

In detail, infrared cameras can be used at certain level of low visibility, particularly, can generate extremely clear images at night, however, lack in reality, perspective and feeling of speed due to monochrome images.

Milli-wave radars can cover relatively long rage even in rainy weather, thus useful in image displaying at low visibility, however, cannot generate clear images due to wavelength extremely longer than light, thus not sufficient for a driver or pilot.

Laser radars have an excellent obstacle detecting function, however, take long for scanning a wide area, thus revealing low response. For a narrow scanning area, they provide relatively clear images, but, narrow views for a driver or pilot, thus not sufficient for safety.

Generation of images of scenery in wide range of sight which could be viewed by a driver or pilot is useful. Such image generation requires decision of degree of risk of collision based on comparison among geographical data, obstacle data and vehicle positional data (longitude, latitude and altitude). These data, however, may not match actual land features and obstacles. Such image generation thus has a difficulty in covering newly appearing obstacles and requires a lot of confirmation of safety.

Further information pertaining to the prior art can be found in US patent 5,983,161 that discloses a GPS vehicle collision avoidance warning and control system and method wherein GPS satellite ranging signals received on comm1, and DGPS auxiliary range correction signals and pseudolite carrier phase ambiguity resolution signals from a fixed known earth base station received on comm2, at one of a plurality of vehicles/aircraft/automobiles are computer processed to continuously determine the one's kinematic tracking position on a pathway with centimeter accuracy. That GPS-based position is communicated with selected other status information to each other one of the plurality of vehicles, to the one station, and/or to one of a plurality of control centers, and the one vehicle receives therefrom each of the others' status information and kinematic tracking position. Objects are detected from all directions by multiple supplemental mechanisms, e.g., video, radar/lidar, laser and optical scanners. Data and information are computer processed and analyzed in neural networks in the one vehicle to identify, rank, and evaluate collision hazards/objects, an expert operating response to which is determined in a fuzzy logic associative memory which generates control signals which actuate a plurality of control systems of the one vehicle in a coordinated manner to maneuver it laterally and longitudinally to avoid each collision hazard, or, for motor vehicles, when a collision is unavoidable, to minimize injury or damage therefrom. The operator is warned by a heads up display and other modes and may override. An automotive auto-pilot mode is provided.

US patent 5,530,420 discloses a running guide apparatus for a vehicle that includes stereoscopic picture processing element for processing a pair of stereoscopic pictures of an object outside a vehicle imaged by a imaging system mounted on the vehicle, construction detection element for detecting a plurality of various constructions by using three dimensional position data calculated with each portion of the object corresponding to the distance distribution data from the stereoscopic picture processing element; gap distance calculation element for respectively calculating the nearest distance as right and left gap distances each between an extended line of right or left side of the vehicle and each of ends on the vehicle side of the plurality of various constructions detected by the construction detection element; and information element for informing the driver of data related to the right and left gap data calculated by the gap distance calculation element; so as to obtain a distance distribution of an entire picture in dependency upon a discrepancy amount positions corresponding to of the pair of the stereoscopic pictures in accordance with a principle of a triangulation.

US patent 5,410,346 discloses a system for monitoring condition outside vehicle using imaged picture by a plurality of television cameras, wherein a distance between a running vehicle and an object is determined over an imaged picture with high reliability. Three-dimensional objects or a road shape along with accurate position or dimension are also detected. An object within a set region outside a vehicle is imaged by a stereoscopic optical system to input the imaged picture of the object into a stereoscopic picture processing apparatus. The stereoscopic picture processing apparatus processes the picture imaged by the stereoscopic optical system to calculate a distance distribution over the entire picture. A road/three-dimensional object detecting apparatus calculates three-dimensional positions of respective portions of objects corresponding to information of the distance distribution to detect the shape of the road and a plurality of three-dimensional objects by using information of these three-dimensional positions securely and with high reliability.

### SUMMARY OF THE INVENTION

A purpose of the present invention is to provide an integrated vision system that offers crew on a vehicle with almost real pseudo views at high visibility like in a good whether even at low visibility with detection of obstacles to the front for safe and sure flight or driving.

The present invention provides an integrated vision system in accordance with independent claim 1. Preferred embodiments of the invention are reflected in the dependent claims.

### BRIEF DESCRIPTION OF DRAWINGS

FIG. 1 shows a block diagram of an integrated vision system according to the present invention; and
FIG. 2 illustrates displaying zones.

### DETAILED DESCRIPTION OF PREFERRED EMBODIMENTS

Preferred embodiments according to the present invention will be disclosed with reference to the attached drawings.

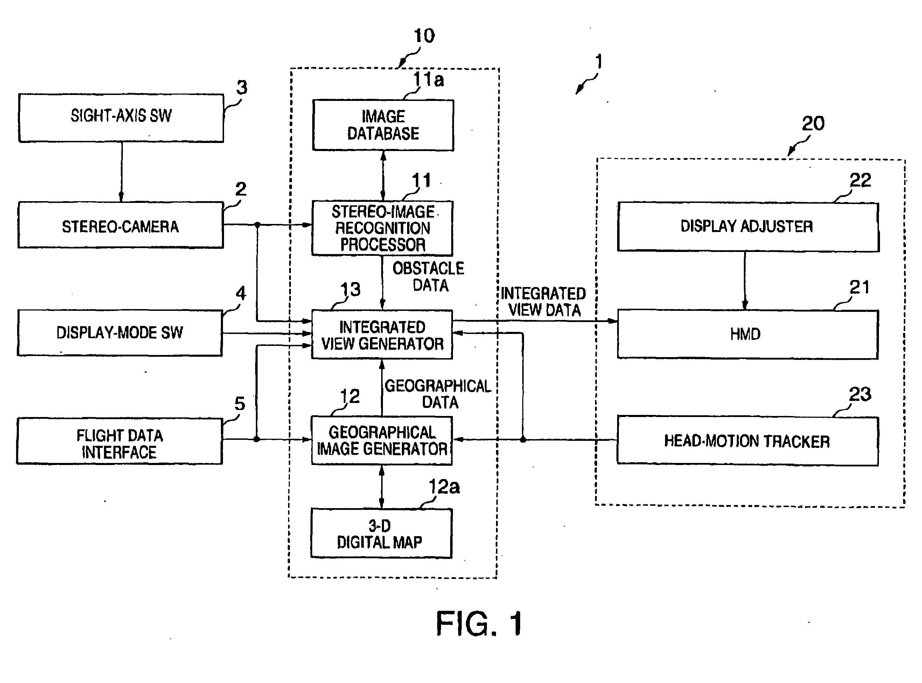

An integrated vision system 1 shown in FIG. 1 is installed in a vehicle such as an automobile, a train, and an aircraft. The system 1 offers integrated views to a driver or pilot generated as visible images of virtual reality at high visibility like in good weather even though actual visibility is very low in bad weather due to mist or fog, or at night.

Disclosed hereinafter is an embodiment in which the integrated vision system 1 is installed in an aircraft such as a helicopter that flies at relatively low altitude.

The integrated vision system 1 is provided with a stereo-camera 2 for taking images of forward scenery of a predetermined area, an image combining apparatus 10 and an integrated view displaying apparatus 20 as main components.

A pair of left and right images taken by the stereo-camera 2 are displayed on left and right viewing points of a pilot to generate three-dimensional (3-D) images giving perspective and feeling of altitude and speed to the pilot.

Moreover, the pair of left and right images are processed by stereo-image processing for calculation of data on (relative) distance to objects. The image and distance data are processed by image recognition processing for displaying obstacles as warning when the obstacles are detected on or in the vicinity of flight route.

The integrated vision system 1 is provided with a sight-axis switch 3 for varying an axis of sighting by which the stereo-camera 2 turns into the direction required by the pilot or other crew, a display-mode switch 4 for controlling the stereo camera 2 to halt displaying 3-D images, and flight data interface 5 for entering flight data such as speed, altitude, position and attitude of a helicopter.

The sight-axis switch 3 is useful to know beforehand the conditions of flight route to which the helicopter is to turn into or determine whether there is any obstacle on the route. The switch 3 in this embodiment is a manual switch to manually rotate the optical axis of the stereo-camera 2. Not only this, the stereo-camera 3 can be automatically turned into any direction by detecting pilot's viewing point by a head-motion tracker 23, etc., which will be described later.

The stereo-camera 2 in this embodiment consists of two infrared cameras for generating extremely clear images particularly at night. The two infrared cameras are arranged with an optimum distance (base-line length) within an allowable range based on search range and distance accuracy for accurately detecting obstacles predicted under several flight conditions.

Flight conditions under which a pilot requires support of artificial view at general low visibility mostly include night flight or other flight very close to this. Infrared cameras having an excellent night vision function are useful in such conditions. Particularly, 3-D images generated by two infrared cameras offer virtual reality to a pilot with perspective and feeling of altitude and speed which cannot be achieved by a single infrared camera.

Other flight conditions can be covered by several types of image sensors such as an ordinary camera, an intensifier that responses faint light, active/passive milli-wave cameras exhibiting excellent transparency to mist and rain and sensitive CCDs, other than infrared cameras. These sensors can be selectively combined in accordance with cause of low visibility.

When relatively light-weight image sensors are used for cameras of the stereo camera 2, the base-line length for the stereo-camera 2 can be set by shifting both or either of cameras with the image sensors.

Heavy image sensors can be fixed with an objective lens mechanism installed in a tube of a periscope, the tube-length being variable for varying the base-line length.

The image combining apparatus 10 is provided with a stereo-image recognition processor 11 for recognizing obstacles by processing left and right images from the stereo camera 2, a geographical image generator 12 for generating 3-D geographical images of scenery which could be viewed by a pilot or crew based on view-point data sent from the head-motion tracker 23 which will be described later and data from the flight data interface 5, and an integrated view generator 13 for generating integrated views which are combination of 3-D view data of left and right images from the stereo-camera 2, obstacle data from the stereo-image recognition processor 11, geographical data on wide view from the geographical image generator 12 and data from the flight data interface 5.

The stereo-image recognition processor 11 is provided with an image database 11a that stores several types of 3-D data for recognizing and displaying several types of obstacles, etc.

The geographical image generator 12 is provided with a 3-D digital map 12a that stores wide-area geographical data obtained by aerial survey or from satellites.

The integrated view displaying apparatus 20 is provided with a head-mount display (HMD) 21 to be mounted on a helmet of the pilot or crew and having a transparent-type display such as a transparent-type liquid-crystal display panel by which a pilot or crew can view actual scenery through integrated views from the integrated view generator 13, a display adjuster 22 for adjusting intensity and contrast of integrated views, and transparency to the actual views on the HMD 21 so that the pilot or crew can observe the overlapped actual views and integrated views in a good condition, and the head-motion tracker 23 for tracking the head position and attitude of the pilot or crew to output view-point data of the pilot or crew.

A pair of left and right images taken by the stereo-camera 2 during flight are sent to the integrated view generator 13 as 3-D images and also to the stereo-image recognition processor 11 for detecting forward obstacles.

The stereo-image recognition processor 11 processes the left and right images from the stereo-camera 2 by stereo-matching processing to obtain correlation between the images, thus calculating distance data by triangular surveying based on parallax to the same object, the position of the stereo camera 2 and its parameter such as focal length.

Data stored in the image database is accessed based on the distance and image data for recognizing obstacles, any objects that would block flight. The integrated vision system 1 installed in aircraft, for example, helicopters that fly relatively low altitude recognizes structures such as pylons and skyscrapers or other aircraft, etc., in forward view during night flight. When the system 1 also recognizes high-voltage electrical power lines in the image data under recognition of pylons, it generates obstacle data that symbolizes or emphasizes the power lines and send the data to the integrated view generator 13.

Accordingly, when the integrated vision system 1 recognizes pylons, high-voltage electrical power lines and skyscraper, etc., in forward view via the stereo camera 2, it immediately warns the pilot of those structures as obstacles that could collide with so that the helicopter immediately takes an evasive action.

The present invention therefore offers high safety flight or driving without determination of degree of risk of collision by comparing stored positional data such as longitude, latitude and altitude with actual flight data in 3-D digital map.

The geographical image generator 12 performs coordinate-conversion of aircraft data such as speed, altitude and attitude and flight positional data input via the aircraft flight data interface 5 onto viewing points of the pilot or crew input from the head-motion tracker 23. The generator 12 further retrieves the converted data from the 3-D digital map 12a as 3-D geographical images which could be viewed by the pilot or crew and sent the 3-D images to the integrated view generator 13. The 3-D images are geographical data wider than actual scenery in forward view, for example, a row of mountains in the distance which will not be directly connected to safety against collision. These 3-D geographical image data can been seen as almost real scenes based on 3-D display generated by computer graphics with geographical information such as place names, lakes, loads and rivers if necessary.

The 3-D geographical image data may be generated from images detected by a wide milli-wave radar instead of the 3-D digital map 12a.

The integrated view generator 13 receives 3-D image data of left and right images taken by the stereo-camera 2 controlled by the sight-axis switch 3 and also the obstacle images generated by the stereo-image recognition processor 11. The generator 13 also receives wide peripheral geographical images generated by the geographical image generator 12.

The integrated view generator 13 combines the obstacle and peripheral geographical images with image processing such as adjustments to resolution, intensity, contrast and color, and also edge-blending under the control of the display-mode switch 4, to generate natural images with no visible joints of combination as integrated view data.

The integrated view generator 13 combines the integrated view data with flight data such as speed, altitude, position and attitude sent from the flight data interface 5 if necessary, and send them to the HMD 21.

At high visibility such as a good weather, the stereo camera 2 may be turned off so that integrated view data not 3-D images of the stereo camera 2 but the obstacle data and other data, if necessary, are sent to the HMD 21.

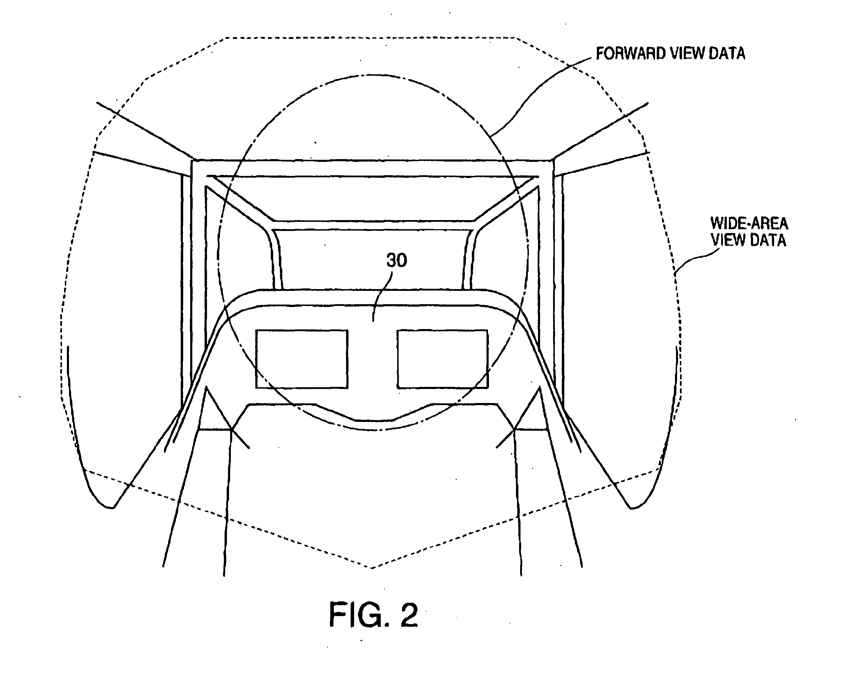

FIG. 2 illustrates viewing zones covered by the HMD 21 with the integrated view data processed as disclosed above.

A viewing zone surrounded by a dashed line is used for displaying the forward view data with obstacle data from the stereo camera 2. Another viewing zone surrounded by a dotted line but outside the dashed line is used for displaying the wide-area view data of 3-D geographical images.

The pilot or crew can see actual scenery from a cockpit 30 through windows overlapping with the integrated views while watching indicators on the cockpit, thus the pilot or crew can see to indicated data in addition to those displayed on the HMD 21.

As disclosed above, the integrated vision system 1 according to the present invention offers a pilot or crew with 3-D images almost real in perspective, altitude and speed based on left and right images taken by the stereo camera 2 even at a low visibility, which cannot be achieved by a single camera.

The integrated vision system 1 further processes the left and right images from the stereo camera 2 by stere-image processing for image recognition using distance data to detect obstacles on or in the vicinity of flight rout and displays the obstacles as warning.

The integrated vision system 1 according to the present invention thus offers pseudo-visual flight even at row visibility to support a pilot for safe and sure flight in regular service or emergency.

Three-D images may not be required at high visibility, however, detection of obstacles for warning by stereo-image recognition processing achieves further safe flight.

Three-D image display of forward views and obstacle detection/warning are performed by the stereo-camera 2 with no sensors for respective functions. The integrated vision system 1 according to present invention thus can be structured as a reliable and light system at a low cost.

As disclosed above, the present invention offers crew on a vehicle with almost real pseudo views at high visibility like in a good whether even at low visibility for safe and sure flight or driving with detection of obstacles to the front.

It is further understood by those skilled in the art that the foregoing description is a preferred embodiment of the disclosed system and that various change and modification may be made in the invention without departing from the scope thereof.

## Claims

1. An integrated vision system comprising:
at least one stereo-camera installed in a vehicle for taking images of predetermined outside area;
a stereo-image recognizer for processing a pair of images taken by the stereo-camera to recognize objects that are obstacles to the front, thus generating obstacle data;
an integrated view data generator for generating integrated view data including three-dimensional view data based on the pair of images taken by the stereo-camera and the obstacle data from the stereo-image recognizer, and
an integrated image display for displaying the integrated view data as visible images to the crew on the vehicle
wherein the integrated vision data generator is capable of removing the three-dimensional vision data from the integrated vision data by turning off the stereo camera while retaining the obstacle data.

2. The integrated system according to claim 1, wherein the integrated view data generator adds peripheral wide-area view data to the three-dimensional view data.

3. The integrated vision system according to any of claims 1 or 2, wherein the integrated view data generator includes a head mount display for overlapping the visible images of the integrated vision data and actual view.

4. The integrated vision system according to any of claims 1 to 3, wherein, the stereo-camera includes two infrared cameras arranged as separated form each other by a distance corresponding to a specific base line.

5. The integrated vision system according to any of claims 1 to 4, further comprising at least a first stereo-camera, a second stereo-camera and a third stereo camera, the first stereo-camera being an infrared camera, the second camera being a milli-wave camera and the third camera being an intensifier, the first, the second and the third stereo-cameras being selectively used in accordance with actual views.

## Patentansprüche

1. Integrationssichtsystem, das Folgendes umfasst:
mindestens eine Stereokamera, die in einem Fahrzeug installiert ist, um Bilder eines vorbestimmten Außenbereichs aufzunehmen;
eine Stereobilderkennungsvorrichtung zum Verarbeiten eines Paars von Bildern, die von der Stereokamera aufgenommen wurden, um Objekte zu erkennen, die vorn befindliche Hindernisse darstellen, wodurch Hindernisdaten generiert werden;
einen Integrationsansichtsdatengenerator zum Generieren von Integrationsansichtsdaten einschließlich dreidimensionaler Sichtdaten auf Grundlage des Paars von Bildern, die von der Kamera aufgenommen wurden, und der Hindernisdaten aus der Stereobilderkennungsvorrichtung, und
eine Integrationsbildanzeige zum Anzeigen der Integrationsansichtsdaten als sichtbare Bilder für die Besatzung im Fahrzeug,
wobei der Integrationsansichtsdatengenerator in der Lage ist, die dreidimensionalen Sichtdaten aus den Integrationsansichtsdaten zu beseitigen, indem die Stereokamera abgeschaltet wird, während die Hindernisdaten beibehalten werden.

2. Integrationssystem nach Anspruch 1, wobei der Integrationsansichtsdatengenerator den dreidimensionalen Sichtdaten periphere Weitraumsichtdaten hinzufügt.

3. Integrationssichtsystem nach einem der Ansprüche 1 oder 2, wobei der Integrationsansichtsdatengenerator eine Helmanzeige umfasst, um die sichtbaren Bilder der Integrationssichtdaten und die tatsächliche Ansicht übereinander zu legen.

4. Integrationssichtsystem nach einem der Ansprüche 1 bis 3, wobei die Stereokamera zwei Infrarotkameras umfasst, die um einen Abstand getrennt voneinander angeordnet sind, der einer spezifischen Grundlinie entspricht.

5. Integrationssichtsystem nach einem der Ansprüche 1 bis 4, darüber hinaus mindestens eine erste Stereokamera, eine zweite Stereokamera und eine dritte Stereokamera umfassend, wobei die erste Stereokamera eine Infrarotkamera ist, die zweite Kamera eine im millimetrischen Wellenbereich arbeitende Kamera ist, und die dritte Kamera ein Verstärker ist, wobei die erste, die zweite und die dritte Stereokamera entsprechend den tatsächlichen Ansichten selektiv eingesetzt werden.

## Revendications

1. Système de vision intégré comprenant :
au moins un appareil de prise de vues stéréo installé dans un véhicule pour prendre des images d'une zone extérieure prédéterminée,
un module de reconnaissance d'images stéréo destiné à traiter une paire d'images prises par l'appareil de prise de vues stéréo pour reconnaître des objets qui sont des obstacles à l'avant, en générant ainsi des données d'obstacles,
un générateur de données de vision intégrées destiné à générer des données de vision intégrées comprenant des données de vision en trois dimensions sur la base de la paire d'images prises par l'appareil de prise de vues stéréo et les données d'obstacles provenant du module de reconnaissance d'images stéréo, et
un dispositif d'affichage d'images intégré destiné à afficher des données de vision intégrées sous la forme d'images visibles pour l'équipage du véhicule,
où le générateur de données de vision intégrées est capable de retirer les données de vision en trois dimensions des données de vision intégrées en désactivant l'appareil de prise de vues stéréo tout en conservant les données d'obstacles.

2. Système intégré selon la revendication 1, dans lequel le générateur de données de vision intégrées ajoute des données de vision de champ large périphérique aux données de vision en trois dimensions.

3. Système de vision intégré selon l'une quelconque des revendications 1 à 2, dans lequel le générateur de données de vision intégrées comprend un dispositif d'affichage facial pour faire chevaucher les images visibles des données de vision intégrées et la vision réelle.

4. Système de vision intégré selon l'une quelconque des revendications 1 à 3, dans lequel l'appareil de prise de vues stéréo comprend deux caméras infrarouge disposées pour être séparées l'une de l'autre d'une distance correspondant à une ligne de base spécifique.

5. Système de vision intégré selon l'une quelconque des revendications 1 à 4, comprenant en outre au moins un premier appareil de prise de vues stéréo, un deuxième appareil de prise de vues stéréo et un troisième appareil de prise de vues stéréo, le premier appareil de prise de vues stéréo étant un appareil de prise de vues infrarouge, le deuxième appareil de prise de vues étant un appareil de prise de vues à ondes millimétriques et le troisième appareil de prise de vues étant un dispositif d'intensification, le premier, le second et le troisième appareils de prise de vues stéréo étant sélectivement utilisés en fonction des vues réelles.
